# EUROPÄISCHE PATENTSCHRIFT

(11) **EP 4 013 564 B1**
(45) Veröffentlichungstag und Bekanntmachung des Hinweises auf die Patenterteilung: **15.01.2025**
(21) Anmeldenummer: 20764581.3
(22) Anmeldetag: 10.08.2020
(51) Int. Cl.: B23D 57/00, B28D 1/08

(54) **SEILSÄGE**
CABLE SAW
SCIE À CÂBLE

(30) Priorität: 13.08.2019 AT 507132019
(43) Veröffentlichungstag der Anmeldung: 22.06.2022
(73) Patentinhaber: Schwing GmbH, 9431 St. Stefan im Lavanttal (AT)
(72) Erfinder: HATZER, Markus, 9972 Virgen (AT); GRACNER, Reinhold, 9112 Griffen (AT)
(74) Vertreter: Schneiders & Behrendt Bochum
(86) Internationale Anmeldenummer: PCT/EP2020/072353
(87) Internationale Veröffentlichungsnummer: WO 2021/028374

(56) Entgegenhaltungen:
- EP-A2- 1 086 794
- WO-A1-2014/000003
- DE-A1- 102005 037 542

## Beschreibung

Die Erfindung betrifft eine Seilsäge nach dem Oberbegriff des Anspruchs 1.

Eine solche Seilsäge ist beispielsweise aus WO 2014/000003 A1 bekannt.

Bei einer solchen Seilsäge wird zum Zerteilen von Steinblöcken in der Regel ein mit Diamantsegmenten besetztes Sägeseil mit einer Geschwindigkeit von bis zu 40 m/s (144 km/h) durch das Werkstück gezogen, um es zu zerteilen.

Bei bekannten stationären Seilsägen, wie beispielsweise aus FR 596 906 A bekannt, ist üblicherweise ein endloses Sägeseil über zwei Umlenkrollen geführt. Nachteilig ist dabei einerseits, dass die zu zerteilenden Werkstücke nicht vor Ort zerteilt werden können, sondern zur Seilsäge hin transportiert werden müssen. Andererseits ist nachteilig, dass die Seilsäge durch den fixen Abstand der zwei Umlenkrollen einen festgelegten und begrenzten Sägeabschnitt und Schneidhöhe aufweist und nur auf Seildruck arbeiten kann, wobei die Seilspannung üblicherweise nicht variabel ist. Aufgrund dieser Nachteile sind auch das Gewicht und die Größe des zu zerteilenden massiven Werkstücks bei diesen stationären Seilsägen begrenzt.

Bei beispielsweise aus der EP 1 086 794 A2 bekannten mobilen Seilsägen, welche zum massiven Werkstück gebracht werden, um dieses zu Zerteilen, liegt ein Nachteil hauptsächlich darin, dass ein offenes Sägeseil um das Werkstück gelegt werden muss, dass danach zu einem Endlos-Sägeseil verpresst wird. Hierzu muss eine Bohrung im Werkstück durchgeführt werden, um das Sägeseil durchführen zu können. Nachteilig ist, dass das Sägeseil geöffnet werden muss, um dieses durch das Werkstück durchzuführen. Dies ist auch deswegen nachteilig, da das Sägeseil nicht genau geführt und somit kein genauer Schnitt ausgeführt werden kann. Da das Sägeseil zusätzlich um scharfe Kanten beispielsweise im Eintrittsbereich in das Werkstück oder im Austrittsbereich aus dem Werkstück geführt wird, unterliegt es üblicherweise einem erhöhten Verschleiß und es besteht eine erhöhte Verletzungsgefahr, da bei einem Seilriss ein relativ langer Abschnitt des Sägeseils peitschenartig ausschlagen kann. So muss eine große Sicherheitszone um die Seilsäge eingerichtet werden. Ein weiterer Nachteil solcher Seilsägen ist die Größe der Führungseinrichtung, was einen mobilen Einsatz einschränkt, da die Abmessungen einer solchen einsatzbereit montierten Säge keine weiten Transportstrecken zulassen. Aus diesem Grund müssen solche Seilsägen oft vor Ort für den Einsatz fertig montiert werden.

Die DE 10 2005 037542 A1 offenbart eine Seilsäge mit einem angetriebenen Sägeseil, wobei das Sägeseil einen Sägeabschnitt zum Eingriff in ein Werkstück bildet, wenigstens einer aus zwei Teleskoparmen und einer Drehachse gebildeten Führungseinrichtung zur Führung des angetriebenen Sägeseils, wobei die Führungseinrichtung dazu eingerichtet ist, den Sägeabschnitt des angetriebenen Sägeseils zu dem Werkstück zu positionieren. Mit der beschriebenen Führungseinrichtung ist eine Zustellung des Sägeabschnitts zum Werkstück möglich, indem die zwei Teleskoparme in einer radialen Richtung zur Achse aus- oder eingefahren werden.

Es ist daher Aufgabe der Erfindung, eine verbesserte Seilsäge anzugeben, die eine kompakte Transportgröße und einen schnellen und sicheren Einsatz ermöglicht, wobei zusätzlich eine hohe Flexibilität bei der Veränderung der Position und/oder Länge des Sägeabschnitts durch die Führungseinrichtung gegeben sein soll.

Gelöst wird diese Aufgabe durch eine Seilsäge mit den Merkmalen des Anspruchs 1.

Dadurch, dass die Führungseinrichtung für jede der Bewegungsrichtungen über einen separaten, der einzelnen Bewegungsrichtung zugeordneten Seilspeicher verfügt, kann eine kompakte Baugröße der Seilsäge für den Transport erreicht werden und dennoch lässt sich eine genaue und sichere Führung eines ausreichend großen Sägeabschnitts beim Zerteilen des Werkstückes realisieren. Über die für jede der Bewegungsrichtungen zugeordneten Seilspeicher kann ein kompakter Aufbau und eine flexible Veränderung der Position und/oder Länge des Sägeabschnitts durch die Führungseinrichtung realisiert werden, was die Seilsäge zudem sowohl auf Zug als auch auf Druck einsetzbar macht. Mit der separaten Zuordnung der Seilspeicher zu der einzelnen Bewegungsrichtung kann der Sägeabschnitt des Sägeseils flexibel an die gewünschte Schnittform, Schnittlänge, Schnittbreite und Schnitthöhe angepasst werden. Mit der zugeordneten Seilspeicherung kann die flexibel anpassbare Führungseinrichtung sehr kompakt aufgebaut werden, da für jede Bewegungsrichtung ein separater Seilspeicher vorgesehen ist. Dies ermöglicht auch, die Größe der einzelnen Seilspeicher zu verringern, was bei Seilrissen die Länge des herumpeitschenden Sägeseils verkürzt, sodass der erforderliche Sicherheitsbereich beim Zerteilen des Werkstücks geringer ausgelegt werden kann.

Die Führungseinrichtung verfügt über zwei Hauptteleskopauszüge über welche die Zustellung des Sägeabschnitts in Richtung des zu zerteilenden Werkstücks erfolgt. Mit den zwei Hauptteleskopauszügen ist eine besonders einfache Veränderung der Position des Sägeabschnitts durch die Führungseinrichtung möglich. Die zwei Hauptteleskopauszüge ermöglichen vorteilhafterweise eine gemeinsam koordinierte Zustellung des Sägeabschnitts in Richtung des zu zerteilenden Werkstücks, aber auch eine voneinander unabhängige Zustellung des Sägeabschnitts in Richtung des zu zerteilenden Werkstücks. Damit ist eine besonders flexible Positionierung des Sägeabschnitts zum zu zerteilenden Werkstück möglich.

Weiterhin ist vorgesehen, dass die Hauptteleskopauszüge der Führungseinrichtung im Abstand zueinander veränderbar sind, um die Länge des Sägeabschnitts zu verändern. Mit der Veränderung des Abstands der beiden Hauptteleskopauszüge relativ zueinander kann auf sehr einfache Weise die Länge des Sägeabschnitts variiert werden, indem die Hauptteleskopauszüge jeweils in einer Bewegungsrichtung der Führungseinrichtung verlagert werden. Eine beidseitige Verlagerung nach außen vergrößert den Abstand der Hauptteleskopauszüge zueinander und somit die Länge des zur Verfügung stehenden Sägeabschnitts, während eine beidseitige Verlagerung nach innen den Abstand der Hauptteleskopauszüge zueinander verringert und somit die Länge des zur Verfügung stehenden Sägeabschnitts verkleinert. Hierdurch kann die Führungseinrichtung der Seilsäge schnell aus einer kompakten Transportkonfiguration in eine vergrößerte Sägekonfiguration verstellt werden. Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die Führungseinrichtung für jede der Bewegungsrichtungen einen aus mindestens einem Umlenkrollenpaar gebildeten Seilspeicher aufweist. Mit der Bildung des zugeordneten Seilspeichers aus mindestens einem Umlenkrollenpaar ist ein besonders einfacher und kompakter Aufbau der Führungseinrichtung möglich. Die mindestens zwei Umlenkrollen eines Seilspeichers speichern durch die Umlenkung für die zugeordnete Bewegungsrichtung das Sägeseil und geben es bei Bedarf für die Bewegung in der zugeordneten Richtung das Sägeseil im erforderlichen Maße frei.

Besonders bevorzugt ist eine Ausführungsform, die vorsieht, dass das Umlenkrollenpaar eines Seilspeichers über eine Vergrößerung und Verkleinerung des Rollenabstandes der paarweise zum Seilspeicher zusammengefassten Umlenkrollen bei Veränderung der Position und/oder Länge des Sägeabschnitts Sägeseil speichert oder freigibt. Über die Vergrößerung und Verkleinerung des Rollenabstandes kann der Seilspeicher sehr einfach bei einer Bewegung der Führungseinrichtung in der zugeordneten Richtung das Sägeseil im erforderlichen Maße speichern und freigeben. Hierzu wird vorteilhafterweise die Veränderung des Rollenabstandes an die Bewegung der Führungseinrichtung in der zugeordneten Bewegungsrichtung gekoppelt. Über diese Kopplung des Rollenabstandes an die einzelne Bewegungsrichtung der Führungseinrichtung kann die Seilspeicherung bei Veränderung der Position und/oder Länge des Sägeabschnitts sehr einfach und kompakt aufgebaut sein. Die Kopplung des Rollenabstandes der Umlenkrollen an die Bewegung der Führungseinrichtung in der zugordneten Richtung stellt sicher, dass das Sägeseil immer im von der Bewegung abhängigen Maße gespeichert oder freigegeben wird.

Eine besonders vorteilhafte Ausführung der Erfindung bezieht sich darauf, dass der Rollenabstand der paarweise zum Seilspeicher zusammengefassten Umlenkrollen über Teleskopauszüge, an denen mindestens eine Umlenkrolle angeordnet ist, veränderbar ist. Über Teleskopauszüge lässt sich der Abstand der paarweise zusammengefassten Umlenkrollen einfach verändern, um die Speicherkapazität der Seilspeicher an die von der Führungseinrichtung vorgenommene Veränderung der Position und/oder der Länge des Sägeabschnitts anzupassen. Über die Abstandsänderung der Umlenkrollen durch die Teleskopauszüge kann sehr einfach eine Kopplung mit einer Bewegung in der zugeordneten Bewegungsrichtung erfolgen, indem die Teleskopauszüge an die Führungseinrichtung gekoppelt sind und bei einer Bewegung der Führungseinrichtung in der dem Seilspeicher zugeordneten Bewegungsrichtung teleskopierbar sind.

Eine besonders vorteilhafte Ausführung der Erfindung sieht vor, dass der Rollenabstand der paarweise zum Seilspeicher zusammengefassten Umlenkrollen über Teleskopauszüge, an denen beide Umlenkrollen angeordnet sind, veränderbar ist. Die Umlenkrollen sind in diesem Fall bevorzugt an einem Doppelteleskopauszug angeordnet, der die beiden paarweise zum Seilspeicher zusammengefassten Umlenkrollen vorteilhafterweise in entgegengesetzte Richtungen verlagern kann, um den Abstand der beiden Umlenkrollen zueinander und die Position relativ zueinander und absolut zum Werkstück zu verändern. Hierdurch ist eine Führungseinrichtung gegeben, die besonders flexibel die Position und/oder die Länge des Sägeabschnitts der Seilsäge verändern kann.

Besonders vorteilhaft ist eine Ausführungsform, die vorsieht, dass die Hauptteleskopauszüge paarweise zum Seilspeicher zusammengefasste Umlenkrollen aufweisen, die über die Hauptteleskopauszüge zur Zustellung des Sägeabschnitts in Richtung des zu zerteilenden Werkstücks beidseitig in der Auszugsposition veränderbar sind. Mit der Veränderung der Auszugsposition der an den Hauptteleskopauszügen angeordneten Umlenkrollen ist eine besonders einfache Zustellung des Sägeabschnitts in Richtung des zu zerteilenden Werkstücks möglich.

Gemäß einer bevorzugten Ausgestaltung der Erfindung ist vorgesehen, dass die Hauptteleskopauszüge unabhängig voneinander bewegbar sind. Mit einer voneinander unabhängigen Bewegung der beiden Hauptteleskopauszüge relativ zueinander und absolut zum Werkstück, kann die Führungseinrichtung flexibel angepasst und die Position und/oder Länge des Sägeabschnitts einfach verändert werden.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Seilsäge an einem Teleskoplader,
- Figur 2: Rückansicht der Seilsäge,
- Figur 3: Vorderansicht der Seilsäge,
- Figur 4: einseitige Zustellung des Sägeabschnitts,
- Figur 5: beidseitige Zustellung des Sägeabschnitts,
- Figur 6: einseitige Verlängerung des Sägeabschnitts,
- Figur 7: beidseitige Verlängerung des Sägeabschnitts,
- Figur 8: Detailansicht der Drehvorrichtung,
- Figur 9: Ansicht der Schwenkvorrichtung,
- Figur 10: Detailansicht der Seilspeicher- und Seilspannungseinrichtung,
- Figur 11: Seitenansicht des eingezogenen unteren Hauptteleskopauszugs,
- Figur 12: Seitenansicht des ausgezogenen unteren Hauptteleskopauszugs und
- Figur 13: Vorderansicht einer Variante der Seilsäge.

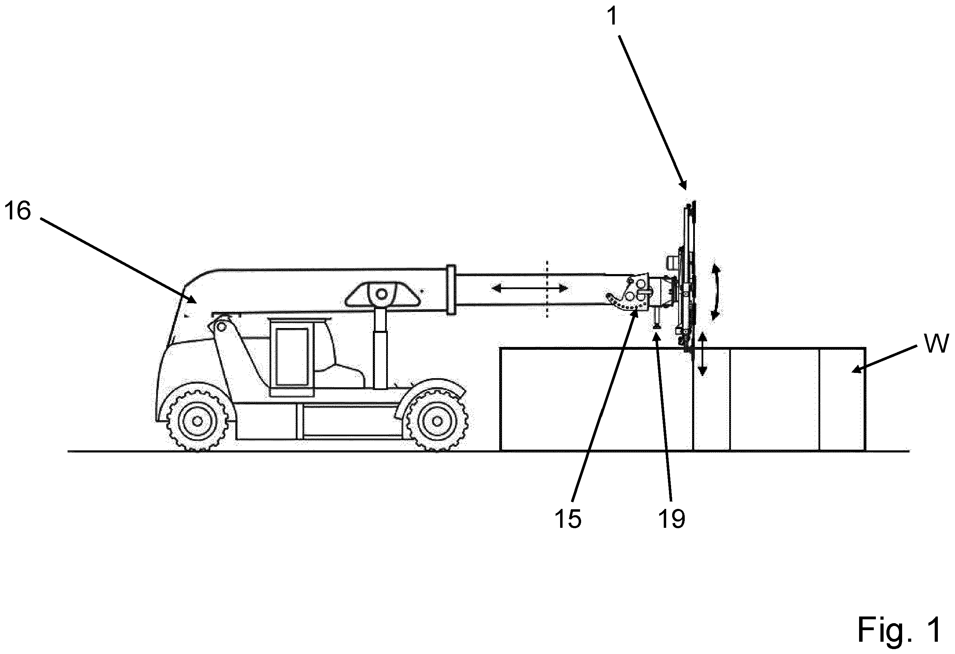

In der Figur 1 mit dem Bezugszeichen 1 bezeichnet ist eine erfindungsgemäße Seilsäge dargestellt. Die Seilsäge 1 ist hier über eine Wechselvorrichtung 15 an einem Teleskoplader 16 angebracht. Hierzu ist vorgesehen, dass die Seilsäge 1 eine Wechselvorrichtung 15 zum Anbringen an eine mobile Trägervorrichtung 16 wie den Teleskoplader aufweist. Die mobile Trägervorrichtung 16 kann im Rahmen der Erfindung je nach Einsatzgebiet über die Wechselvorrichtung 15 an einem Trägerfahrzeug, insbesondere einem angetriebenen Nutzkraftwagen, z.B. einem Radbagger, einem Kettenbagger, einem Radlader, einem Traktor mit Frontlader oder dergleichen und eben einem Teleskoplader angebracht werden.

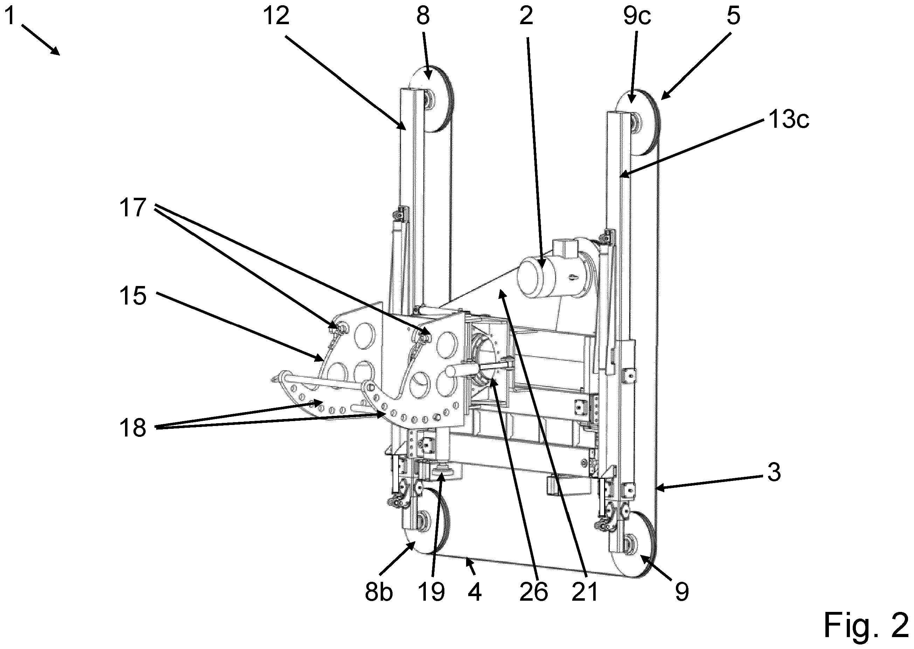

Somit wird erreicht, dass die mobile Seilsäge 1 zum Einsatzort, z.B. auch zu frei liegenden Steinen, hin transportiert werden kann, wobei die Werkstücke W vor Ort zerteilt werden können. Ein aufwändiger und kostenintensiver Transport der Werkstücke W zur Seilsäge 1 hin ist somit nicht mehr notwendig. Die erforderliche Zeit, um das Werkstück W fertig zu zerteilen, wird wesentlich reduziert. Da die erfindungsgemäße Seilsäge 1 an einer Trägervorrichtung 16 mobil einsetzbar ist, wird weiterhin erreicht, dass nicht mehr das Werkstück W zum Sägeseil 3 hingeführt, insbesondere angehoben, werden muss, sondern dass nun das Sägeseil 3 zum Werkstück W hingeführt werden kann. In Figur 2 ist die erfindungsgemäße Seilsäge 1 schräg von der Rückseite gezeigt. In dieser perspektivischen Ansicht ist die Wechselvorrichtung 15 gut zu erkennen, über welche die Seilsäge 1 mit der Trägervorrichtung 16 (Fig. 1) gekoppelt werden kann. Die Wechselvorrichtung 15 verfügt über eine Aufhängung 17 und eine Lochplatte 18, um die Seilsäge 1 stufenweise gekippt zu der Trägervorrichtung 16 montieren zu können. Außerdem ist in der Rückansicht ein Standfuß 19 zu sehen, über den die Seilsäge 1 auf dem Untergrund oder einem zu zerteilenden Werkstück W (Fig. 1) abgestellt werden kann. Mit der Abstützung der Seilsäge 1 auf dem zu zerteilenden Werkstück W (Fig. 1), kann die Trägervorrichtung 16 während des Zerteilens entlastet werden. In dieser Darstellung weiter zu sehen ist der Antrieb 2 der Seilsäge 1, über welchen das Sägeseil 3 zum Zerteilen des Werkstücks W (Fig. 1) angetrieben wird. Der Antrieb 2 kann ein rein hydraulischer, ein rein elektrischer oder ein elektrohydraulischer Antrieb 2 sein und könnte irgendeine der Umlenkrollen antreiben.

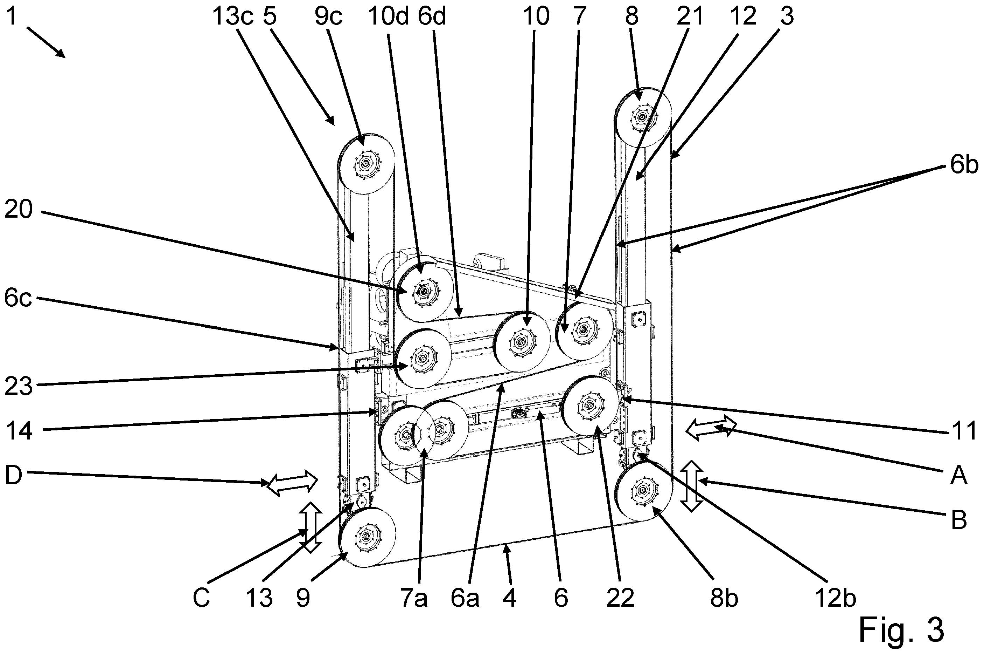

Die Figur 3 zeigt die Seilsäge 1 gemäß der Figuren 1 und 2 in einer Vorderansicht schräg von vorne. In dieser Darstellung ist die Führung des über den Antrieb 2 angetriebenen Sägeseils 3 durch die gesamte Führungseinrichtung 5 zu sehen. Der Antrieb 2 ist zur Übertragung der Antriebsdrehbewegung auf das Sägeseil 3 mit einer Antriebsrolle 20 gekoppelt, welche die Drehbewegung des Antriebs 2 in eine translatorische Bewegung des Sägeseils 3 umwandelt. Das Sägeseil 3 ist unter einer Schutzabdeckung 21 zu einer ersten Umlenkrolle 7 geführt. Diese Umlenkrolle 7 bildet mit der nächsten Umlenkrolle 7a ein erstes Umlenkrollenpaar 7, 7a, das als ein erster Seilspeicher 6a dient. Nach diesem Seilspeicher 6a wird das Sägeseil 3 über eine weitere Umlenkrolle 22, hin zu einem zweiten Umlenkrollenpaar 8, 8b umgelenkt, das einen zweiten Seilspeicher 6b bildet. Während der erste Seilspeicher 6a, wie später noch genauer ausgeführt der seitlichen Bewegungsrichtung A des zweiten Umlenkrollenpaares 8, 8b zugeordnet ist, bildet das zweite Umlenkrollenpaar 8, 8b den zweiten Seilspeicher 6b für die Zustellung der unteren Umlenkrolle 8b und des nachfolgenden Sägeabschnitts 4 in Richtung B und des zu zerteilenden Werkstücks W, das sich beim Zerteilen, wie in Figur 1 gezeigt, bevorzugt unter dem Sägeabschnitt 4 befindet. Der durch das Sägeseil 3 gebildete Sägeabschnitt 4 endet mit der unteren Umlenkrolle 9 eines dritten Umlenkrollenpaares 9, 9c, welches den dritten Seilspeicher 6c bildet. Dieser dritte Seilspeicher 6c ist ebenfalls der Zustellung des Sägeabschnitts 4 in Richtung des zu zerteilenden Werkstücks W zugeordnet. Dem dritten Seilspeicher 6c nachfolgend ist eine weitere Umlenkrolle 23 vorgesehen, welche das Sägeseil 3 zu einem vierten Umlenkrollenpaar 10, 10d der Führungseinrichtung 5 umlenkt, wobei dieses vierte Umlenkrollenpaar 10, 10d einen vierten Seilspeicher 6d bildet. Dieser vierte Seilspeicher 6d umfasst als Umlenkrolle 10d die an den Antrieb 2 gekoppelte Antriebsrolle 20 und ist, wie später noch genauer ausgeführt, der seitlichen Bewegungsrichtung D des dritten Umlenkrollenpaares 9, 9c zugeordnet. An dem ersten Umlenkrollenpaar 7, 7a ist zudem eine Seilspannungseinrichtung 6 vorgesehen, welche für eine ausreichende Seilspannung des Sägeseiles 3 in der Führungseinrichtung 5 sorgt und unter anderem auch temperatur- oder verschleißbedingte Verlängerungen des Seils 3 während des Zerteilens der Werkstücke W (Fig. 1) ausgleicht. Beim Zerteilen eines Werkstücks W (Fig. 1) greift der zwischen den unteren Umlenkrollen 8b, 9 gebildete Sägeabschnitt 4 in das zu zerteilende Werkstück W (Fig. 1) ein. Hierzu ist das Sägeseil 3 bevorzugt mit Diamantsegmenten versehen, die beim Zerteilen des Beton- oder Steinblocks in das Werkstückmaterial einschneiden. Über die gezeigte Führungseinrichtung 5 kann das Sägeseil 3 in der Seilsäge 1 geführt und der vom Sägeseil 3 gebildete Sägeabschnitt 4 einfach zum Werkstück W positioniert werden. Hierzu ermöglicht die Führungseinrichtung 5 mehrere unabhängige Bewegungsrichtungen A, B, C, D, sodass neben einer Zustellung des Sägeabschnitts 4 in Richtung des zu zerteilenden Werkstücks W, zumindest durch die vertikale Verlagerung der unteren Umlenkrollen 8b, 9 gleichzeitig auch eine Veränderung der Länge des Sägeabschnitts 4 zumindest durch die horizontale Verlagerung der unteren Umlenkrollen 8b, 9 möglich ist. Eine Besonderheit der hier dargestellten Seilsäge 1 ist, dass die Führungseinrichtung 5 für jede der Bewegungsrichtungen A, B, C, D über einen separaten, der einzelnen Bewegungsrichtung A, B, C, D zugeordneten, Seilspeicher 6a, 6b, 6c, 6d verfügt.

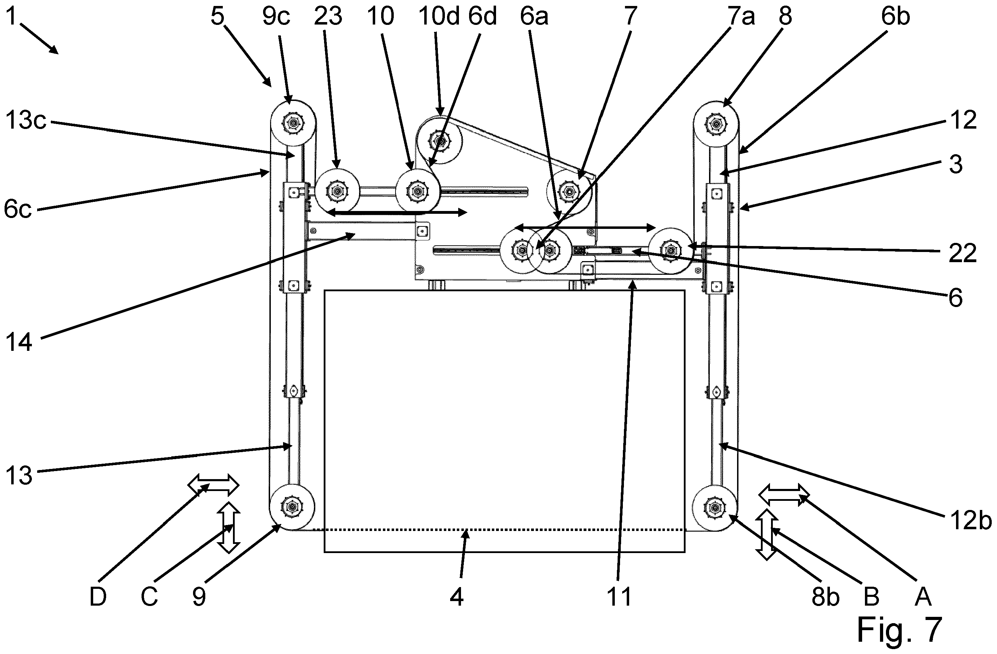

So ist der erste Seilspeicher 6a der seitlichen bzw. horizontalen Bewegungsrichtung A des zweiten Umlenkrollenpaares 8, 8b zugeordnet und ermöglicht, wie auch in Figur 7 zu erkennen ist, eine seitliche bzw. horizontale Verlagerung des zweiten Umlenkrollenpaares 8, 8b. Mit der Verlagerung der unteren Umlenkrolle 8b des zweiten Umlenkrollenpaares 8, 8b nach außen, wird der vom Sägeseil 3 gebildete Sägeabschnitt 4, wie in Figur 7 zu sehen, vergrößert. Das für die seitliche Verlängerung des Sägeabschnitts 4 erforderliche Sägeseil 3 wird bei der Bewegung des zweiten Umlenkrollenpaares 8, 8b in der ersten Bewegungsrichtung A von dem ersten Seilspeicher 6a freigegeben. Wird das zweite Umlenkrollenpaar 8, 8b, wie in Figur 3 zu sehen, in der ersten Bewegungsrichtung A wieder nach innen verlagert, kann der erste Seilspeicher 6a das Sägeseil 3 wieder aufnehmen. Hierzu wird der Abstand der Umlenkrollen 7, 7a des den ersten Seilspeicher 6a bildenden Umlenkrollenpaares 7, 7a synchron mit der Verlagerung des zweiten Umlenkrollenpaares 8, 8b verändert. Zur Freigabe vom Sägeseil 3 wird der Abstand der Umlenkrollen 7, 7a des ersten Seilspeichers 6a, wie in Figur 7 zu sehen, verkürzt, um für eine entsprechende Verlängerung des Sägeabschnitts 4 gespeicherte Seillänge aus dem ersten Seilspeicher 6a freizugeben. Bei einer Verkürzung des Sägeabschnitts 4 wird der Abstand der Umlenkrollen 7, 7a des ersten Seilspeichers 6a wieder vergrößert, um das Sägeseil 3 entsprechend der Verkürzung in dem ersten Seilspeicher 6a zu speichern. Die Veränderung des Abstands der zum ersten Seilspeicher 6a paarweise zusammengefassten Umlenkrollen 7, 7a wird dadurch erreicht, dass die zweite Umlenkrolle 7a an einem ersten Teleskopauszug 11 angeordnet ist, über den der Rollenabstand des Umlenkrollenpaares 7, 7a im ersten Seilspeicher 6a verändert werden kann.

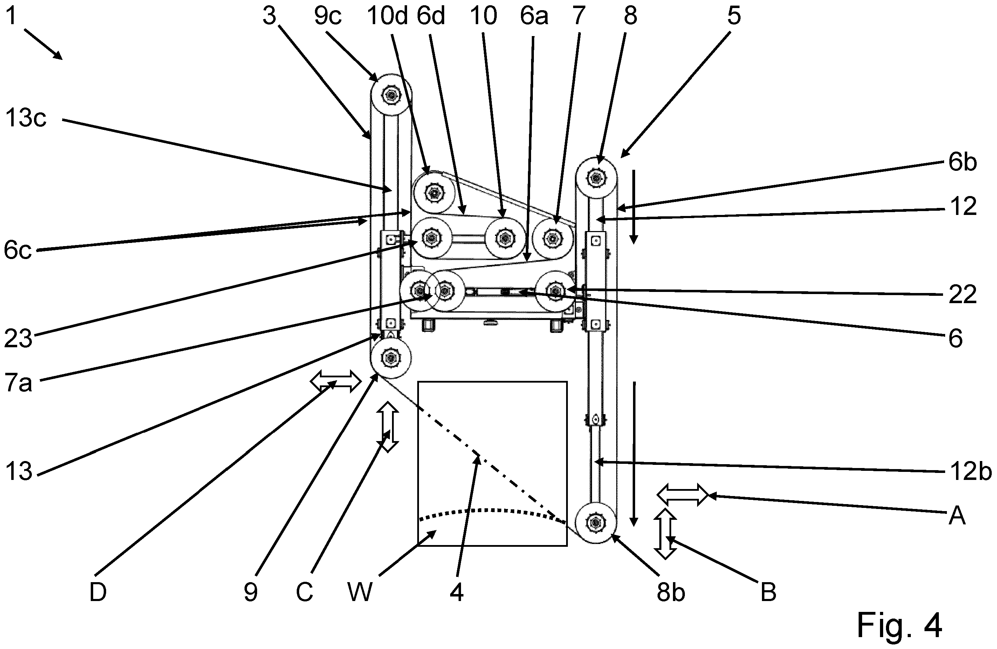

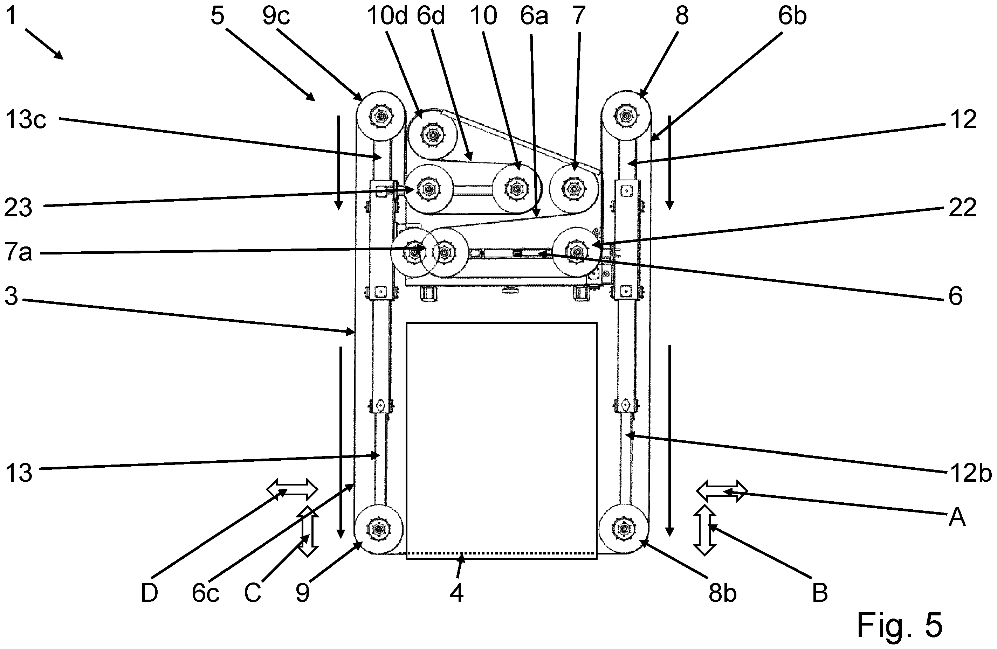

Der zweite Seilspeicher 6b ist einer vertikalen Bewegungsrichtung B für die Zustellung des Sageabschnitts 4 in Richtung des zu zerteilenden Werkstückes W (Fig. 1) zugeordnet und ermöglicht, wie auch in Figur 4 und 5 zu erkennen ist, eine vertikale Verlagerung der unteren Umlenkrolle 8b des zweiten Umlenkrollenpaares 8, 8b. Hierdurch wird der Sägeabschnitt 4, wie in den Figuren 4 und 5 zu sehen ist, auf der rechten Seite in Richtung des zu zerteilenden Werkstücks W geführt. Mit der Verlagerung der unteren Umlenkrolle 8b des zweiten Umlenkrollenpaares 8, 8b nach unten, wird der vom Sägeseil 3 gebildete Sägeabschnitt 4, wie in Figur 4 und 5 zu sehen, nach unten bzw. durch das zu teilende Werkstück W geführt. Das für die Zustellung des Sägeabschnitts 4 erforderliche Sägeseil 3 wird bei der Bewegung der unteren Umlenkrolle 8b des zweiten Umlenkrollenpaares 8, 8b in der zweiten Bewegungsrichtung B von dem zweiten Seilspeicher 6b freigegeben. Wird die untere Umlenkrolle 8b des zweiten Umlenkrollenpaar 8, 8b, wie in Figur 3 zu sehen, in der zweiten Bewegungsrichtung B wieder nach oben verlagert, kann der zweite Seilspeicher 6b das Sägeseil 3 wieder aufnehmen. Hierzu wird der Abstand der Umlenkrollen 8, 8b des den zweiten Seilspeicher 6b bildenden Umlenkrollenpaares 8, 8b verändert. Zur Freigabe von Sägeseil 3 wird die Position und der Abstand der Umlenkrollen 8, 8b des zweiten Seilspeichers 6b, wie in Figur 4 und 5 zu sehen, verändert, um zur Zustellung des Sägeabschnitts 4 entsprechend gespeicherte Seillänge aus dem zweiten Seilspeicher 6b freizugeben. Bei Zustellung des Sägeabschnitts 4 in Richtung des zu zerteilenden Werkstücks W wird die untere Umlenkrolle 8b entsprechend der Zustellung über den ersten Hauptteleskopauszug 12, 12b nach unten bewegt. Dieser erste Hauptteleskopauszug 12, 12b ist als Doppelteleskopauszug 12, 12b ausgebildet mit einem zweiteiligen Teleskopauszug 12, 12b in entgegengesetzte Richtungen. Hierdurch wird gleichzeitig zur Zustellung der unteren Umlenkrolle 8b durch den Teleskopauszug 12b der Abstand der oberen Umlenkrolle 8 des zweiten Seilspeichers 6b durch den zweiten Teleskopauszug 12 zu der weiteren Umlenkrolle 22 um die Hälfte der Zustellung reduziert. Hierdurch wird die im zweiten Seilspeicher 6b gespeicherte Sägeseillänge freigegeben. Beim Zurückfahren des Sägeabschnitts 4 wird der Abstand der Umlenkrollen 8, 8b des zweiten Seilspeichers 6b wieder verändert, indem der Abstand der weiteren Umlenkrolle 22 zu der oberen Umlenkrolle 8 des zweiten Seilspeichers 6b um die Hälfte der Rückstellung der unteren Umlenkrolle 8b vergrößert wird, um das Sägeseil 3 entsprechend der Rückstellung in dem zweiten Seilspeicher 6b zu speichern. Die Veränderung des Abstands der zum zweiten Seilspeicher 6b paarweise zusammengefassten Umlenkrollen 8, 8b wird dadurch erreicht, dass die beiden Umlenkrollen 8, 8b an dem zweiten Teleskopauszug 12, 12b angeordnet sind, der als Doppelteleskopauszug 12, 12b den Abstand der Umlenkrollen 8, 8b durch die Veränderung der Position beider Umlenkrollen 8, 8b ändert.

Auch der dritte Seilspeicher 6c ist einer vertikalen Bewegungsrichtung C für die Zustellung des Sageabschnitts 4 in Richtung des zu zerteilenden Werkstückes W zugeordnet und ermöglicht, wie auch in Figur 5 zu erkennen ist, eine vertikale Verlagerung der unteren Umlenkrolle 9 des dritten Umlenkrollenpaares 9, 9c, welches den dritten Seilspeicher 6c bildet. Hierdurch wird der Sägeabschnitt 4, wie in Figur 5 zu sehen ist, auf der linken Seite in Richtung des zu zerteilenden Werkstücks W geführt. Über die Verlagerung der unteren Umlenkrolle 9 des dritten Umlenkrollenpaares 9, 9c nach unten, wird der vom Sägeseil 3 gebildete Sägeabschnitt 4, wie in Figur 5 zu sehen, nach unten bzw. durch das zu teilende Werkstück W geführt. Das für die Zustellung des Sägeabschnitts 4 erforderliche Sägeseil 3 wird bei der Bewegung der unteren Umlenkrolle 9 des dritten Umlenkrollenpaares 9, 9c in der dritten Bewegungsrichtung C von dem dritten Seilspeicher 6c freigegeben. Wird die untere Umlenkrolle 9 des dritten Umlenkrollenpaars 9, 9c, wie in Figur 3 zu sehen, in der dritten Bewegungsrichtung C wieder nach oben verlagert, kann der dritte Seilspeicher 6c das Sägeseil 3 wieder aufnehmen. Hierzu wird der Abstand der Umlenkrollen 9, 9c des den dritten Seilspeicher 6c bildenden Umlenkrollenpaares 9, 9c verändert.

Zur Freigabe von Sägeseil 3 wird die Position und der Abstand der Umlenkrollen 9, 9c des dritten Seilspeichers 6c, wie in Figur 5 zu sehen, verändert, um zur Zustellung des Sageabschnitts 4 entsprechend gespeicherte Seillänge aus dem dritten Seilspeicher 6c freizugeben. Bei Zustellung des Sägeabschnitts 4 in Richtung des zu zerteilenden Werkstücks W wird die untere Umlenkrolle 9 entsprechend der Zustellung über den zweiten Hauptteleskopauszug 13, 13c nach unten bewegt. Dieser zweite Hauptteleskopauszug 13, 13c ist als Doppelteleskopauszug 13, 13c ausgebildet mit einem zweiteiligen Teleskopauszug 13, 13c in entgegengesetzte Richtungen. Hierdurch wird gleichzeitig zur Zustellung der unteren Umlenkrolle 9 der Abstand der oberen Umlenkrolle 9c des dritten Seilspeichers 6c durch den dritten Teleskopauszug 13, 13c zu der nachfolgenden weiteren Umlenkrolle 23 um die Hälfte der Zustellung reduziert. Hierdurch wird die im dritten Seilspeicher 6c gespeicherte Sägeseillänge freigegeben. Beim Zurückfahren des Sägeabschnitts 4 wird der Abstand der Umlenkrollen 9, 9c des dritten Seilspeichers 6c wieder verändert, indem der Abstand der weiteren Umlenkrolle 23 zu der oberen Umlenkrolle 9c des dritten Seilspeichers 6c um die Hälfte der Rückstellung der unteren Umlenkrolle 9 vergrößert wird, um das Sägeseil 3 entsprechend der Rückstellung in dem dritten Seilspeicher 6c zu speichern. Die Veränderung des Abstands der zum dritten Seilspeicher 6c paarweise zusammengefassten Umlenkrollen 9, 9c wird dadurch erreicht, dass die beiden Umlenkrollen 9, 9c an dem dritten Teleskopauszug 13, 13c angeordnet sind, der den zweiten Hauptteleskopauszug 13, 13c bildet und als Doppelteleskopauszug 13, 13c den Abstand der Umlenkrollen 9, 9c durch die Veränderung der Position beider Umlenkrollen 9, 9c ändert.

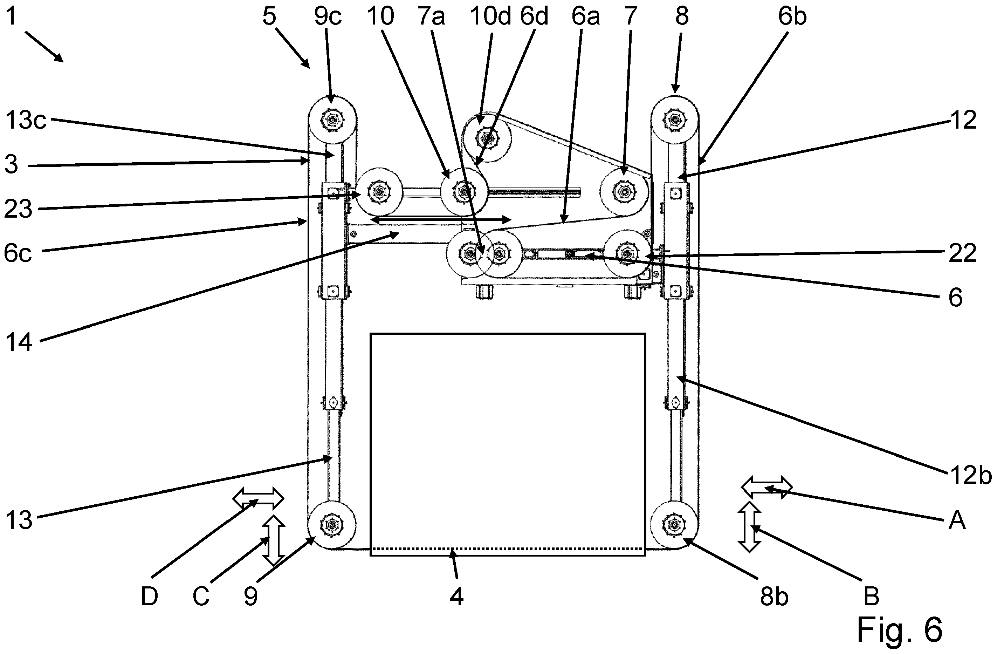

Der vierte Seilspeicher 6d ist der seitlichen bzw. horizontalen Bewegungsrichtung D des dritten Umlenkrollenpaares 9, 9c zugeordnet und ermöglicht, wie auch in den Figuren 6 und 7 zu erkennen ist, eine seitliche bzw. horizontale Verlagerung des dritten Umlenkrollenpaares 9, 9c. Mit der Verlagerung der unteren Umlenkrolle 9 des dritten Umlenkrollenpaares 9, 9c nach außen, wird der vom Sägeseil 3 gebildete Sägeabschnitt 4, wie in Figur 6 und 7 zu sehen, vergrößert. Das für die seitliche Verlängerung des Sägeabschnitts 4 erforderliche Sägeseil 3 wird bei der Bewegung des dritten Umlenkrollenpaares 9, 9c in der vierten Bewegungsrichtung D von dem vierten Seilspeicher 6d freigegeben. Wird das dritte Umlenkrollenpaar 9, 9c, wie in Figur 3 zu sehen, in der vierten Bewegungsrichtung D wieder nach innen verlagert, kann der vierte Seilspeicher 6d das Sägeseil 3 wieder aufnehmen. Hierzu wird der Abstand der Umlenkrollen 10, 10d des den vierten Seilspeicher 6d bildenden Umlenkrollenpaares 10, 10d durch mit der seitlichen Verlagerung des dritten Umlenkrollenpaares 9, 9c gleichlaufende Verlagerung der Umlenkrollen 10, 23 verändert. Zur Freigabe von Sägeseil 3 wird der Abstand der Umlenkrollen 10, 10d des vierten Seilspeichers 6d, wie in Figur 6 und 7 zu sehen verkürzt, um für eine entsprechende Verlängerung des Sägeabschnitts 4 gespeicherte Seillänge aus dem vierten Seilspeicher 6d freizugeben. Bei einer Verkürzung des Sägeabschnitts 4 wird der Abstand der Umlenkrollen 10, 10d des vierten Seilspeichers 6d wieder vergrößert, um das Sägeseil 3 entsprechend der Verkürzung in dem vierten Seilspeicher 6d zu speichern. Die Veränderung des Abstands der zum vierten Seilspeicher 6d paarweise zusammengefassten Umlenkrollen 10, 10d wird dadurch erreicht, dass die erste Umlenkrolle 10 an einen vierten Teleskopauszug 14 angeordnet ist, über den der Rollenabstand des Umlenkrollenpaares 10, 10d im vierten Seilspeicher 6d verändert werden kann.

Aus Figur 4 geht die einseitige Zustellung des Sägeabschnitts 4 in das Werkstück W hervor. Der rechte Hauptteleskopauszug 12, 12b ist hier unabhängig vom linken Hauptteleskopauszug 13, 13c zur Zustellung des Sägeabschnitts 4 in Richtung des zu zerteilenden Werkstücks W betätigt worden. Die rechte obere Umlenkrolle 8 wurde nur um die Hälfte der Zustellung der unteren Umlenkrolle 8b des zweiten Seilspeichers 6b nach unten bewegt. Es erfolgt also eine Seilspeicherung im zweiten Seilspeicher 6b über die Teleskopierung des zweiten Teleskopauszuges 12, 12b im Verhältnis 1:2. Mit dem Doppelteleskop 12, 12b des ersten Hauptteleskopauszuges 12, 12b über den beide Umlenkrollen 8, 8b des zweiten Seilspeichers 6b bewegt werden können, erfolgt die Seilspeicherung also im Verhältnis 1:2. Der Abstand der beiden Umlenkrollen 8, 8b des zweiten Seilspeichers 6b ist dabei nicht konstant sondern flexibel über das Doppelteleskop 12, 12b einstellbar. Die in Figur 4 gezeigte einseitige Zustellung des Sägeabschnitts 4 hat den Vorteil, dass das Sägeseil 3 nicht immer links und rechts gleichmäßig durch ein Werkstück W vorgetrieben werden muss, was je nach Einsatzfall zu einer geringeren Belastung des Sägeseils führt beziehungsweise den Sägevorgang beschleunigen kann.

In Figur 5 hingegen ist eine beidseitige Zustellung des Sägeabschnitts 4 durch die beiden Hauptteleskopauszüge 12, 12b, 13, 13c gezeigt. Die Hauptteleskopauszüge 12, 12b, 13, 13c positionieren hierzu die paarweise zum Seilspeicher 6b, 6c zusammengefassten Umlenkrollen 8, 8b, 9, 9c indem sie die Auszugsposition verändern, um eine Zustellung des Sägeabschnitts 4 in Richtung des zu zerteilenden Werkstücks W zu erreichen. Die Abbildung zeigt, dass an beiden Hauptteleskopauszügen 12, 12b, 13, 13c separate Seilspeicher 6b, 6c gebildet sind, um bei der Zustellung der unteren Umlenkrollen 8b, 9 bzw. des dazwischen gebildeten Sägeabschnitts 4 in Richtung des zu zerteilenden Werkstück W gespeichertes Sägeseil 3 für die vollzogenen Bewegungen der Führungseinrichtung 5 freizugeben. Dadurch, dass die zwei oberen 12, 13c und die zwei unteren Teleskopauszüge 12b, 13 der Doppelteleskope 12, 12b, 13, 13c im Verhältnis 50/100 nach unten bewegen, bleibt die Gesamt-Seillänge des Sägeseils 3 wie auch die Breite des gebildeten Sägeabschnitts 4 bei der Zustellung unverändert.

Aus Figur 6 geht eine einseitige Verlängerung des Sägeabschnitts 4 an der Seilsäge 1 hervor. Hierzu gibt der vierte Seilspeicher 6d, welcher der seitlichen bzw. horizontalen Bewegungsrichtung D des zweiten Hauptteleskopauszuges 13, 13c zugeordnet ist, erforderliches Sägeseil 3 frei. Hierdurch ermöglicht der vierte Seilspeicher 6d eine seitliche bzw. horizontale Verlagerung des dritten Umlenkrollenpaares 9, 9c zusammen mit dem dritten Teleskopauszug 13, 13c. Mit der Verlagerung der unteren Umlenkrolle 9 des dritten Umlenkrollenpaares 9, 9c nach außen wird der vom Sägeseil 3 gebildete Sägeabschnitt 4 vergrößert. Das für die seitliche Verlängerung des Sägeabschnitts 4 erforderliche Sägeseil 3 wird bei der Bewegung des dritten Umlenkrollenpaares 9, 9c in der vierten Bewegungsrichtung D von dem vierten Seilspeicher 6d freigegeben. Wird das dritte Umlenkrollenpaar 9, 9c zusammen mit dem Doppelteleskopauszug 13, 13c, wie in Figur 3 zu sehen, in der vierten Bewegungsrichtung D wieder nach innen verlagert, kann der vierte Seilspeicher 6d das Sägeseil 3 wieder aufnehmen. Hierzu wird der Abstand der Umlenkrollen 10, 10d des den vierten Seilspeicher 6d bildenden Umlenkrollenpaares 10, 10d verändert. Zur Freigabe von Sägeseil 3 wird der Abstand der Umlenkrollen 10, 10d des vierten Seilspeichers 6d, wie auch in Figur 7 zu sehen, verkürzt, um für eine entsprechende Verlängerung des Sägeabschnitts 4 gespeicherte Seillänge aus dem vierten Seilspeicher 6d freizugeben. Bei einer Verkürzung des Sägeabschnitts 4 wird der Abstand der Umlenkrollen 10, 10d des vierten Seilspeichers 6d wieder vergrößert, um das Sägeseil 3 entsprechend der Verkürzung in dem vierten Seilspeicher 6d zu speichern. Die Veränderung des Abstands der zum vierten Seilspeicher 6d paarweise zusammengefassten Umlenkrollen 10, 10d wird dadurch erreicht, dass die erste Umlenkrolle 10 an einen vierten Teleskopauszug 14 angeordnet ist, über den der Rollenabstand des Umlenkrollenpaares 10, 10d im vierten Seilspeicher 6d verändert werden kann. Somit findet bei Verlängerung und Verkürzung des Sägeabschnitts 4 der Seillängenausgleich über die horizontale Seilspeicherung in dem ersten 6a und dem vierten Seilspeicher 6d statt. Der horizontale Seillängenausgleich in den beiden Seilspeicher 6a, 6d erfolgt im Verhältnis 1:1. Besonders an der gezeigten Anordnung der Umlenkrollen 7, 7a, 8, 8b, 9, 9c, 10, 10d in der Führungseinrichtung 5 ist außerdem, dass sich insgesamt jeweils vier Umlenkrollen 7a, 22, 8, 8b und 9, 9c, 23, 10 auf den seitlich verschieblichen Auszügen befinden. Zwei der Umlenkrollen 23, 10 haben in der horizontalen für die Funktion des Seitenausschubes einen konstanten Abstand. Auf dem anderen Seitenausschub ist die Seilspannungseinrichtung 6 angeordnet, sodass der Abstand der beiden Umlenkrollen 7a, 22 auf dem Ausschub variabel ist. Die Antriebsrolle 20 ist unbeweglich am Maschinenrahmen befestigt und mit dem Antrieb 2 gekoppelt.

Die Figur 7 zeigt die beidseitige Verlängerung des Sägeabschnitts 4 durch die Veränderung des Abstandes der beiden Hauptteleskopauszüge 12, 12b, 13, 13c. Diese beiden Doppelteleskopauszüge 12, 12b, 13, 13c werden hierzu seitlich zum zu zerteilenden Werkstück W über den ersten 11 und den vierten Teleskopauszug 14 auseinander bewegt. Hierdurch ist bei eingezogenen Teleskopauszügen 11, 12, 12b, 13, 13c, 14 eine kompakte Transportgröße realisierbar, während, wie in Figur 7 zu sehen, bei beidseitig nach außen verschobenen Hauptteleskopauszügen 12, 12b, 13, 13c ein breiter Sägeabschnitt 4 zwischen den unteren Umlenkrollen 8b, 9 geschaffen werden kann.

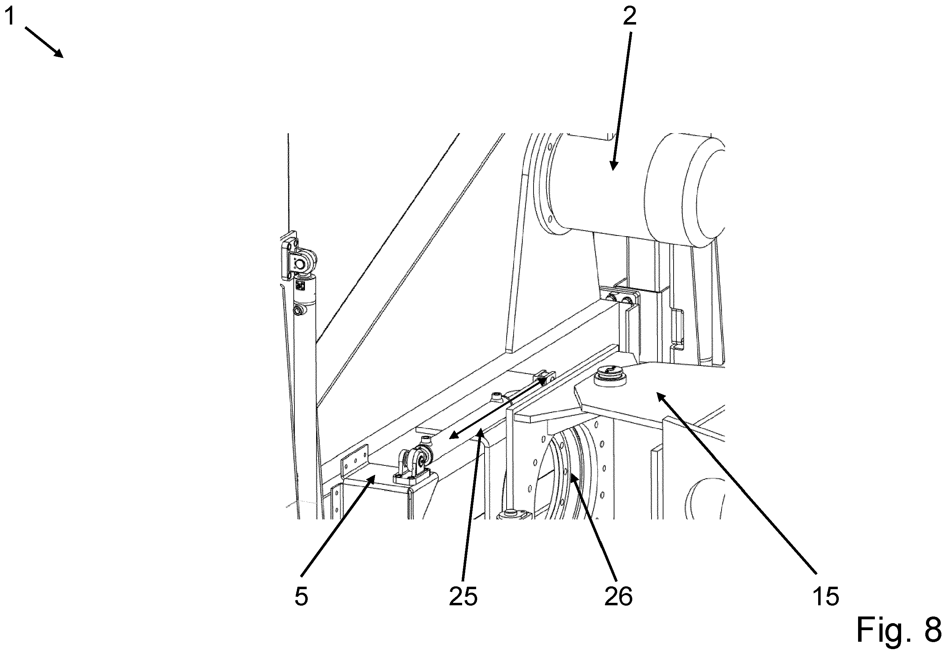

Die Figur 8 zeigt eine Detailansicht auf die Drehvorrichtung 24, welche auch in Figur 2 zu sehen ist, über welche die Führungseinrichtung 5 um die Wechselvorrichtung 15 gedreht werden kann. Hierzu ist ein Arbeitszylinder 25 vorgesehen, der zwischen der Führungseinrichtung 5 und der Wechselvorrichtung 15 eine Drehbewegung um das hier gebildete Drehgelenk 26 ermöglicht. Damit kann die Führungseinrichtung 5 schon vor dem Schneidevorgang ausgerichtet und auch im laufenden Betrieb an der Wechselvorrichtung 15 gedreht werden.

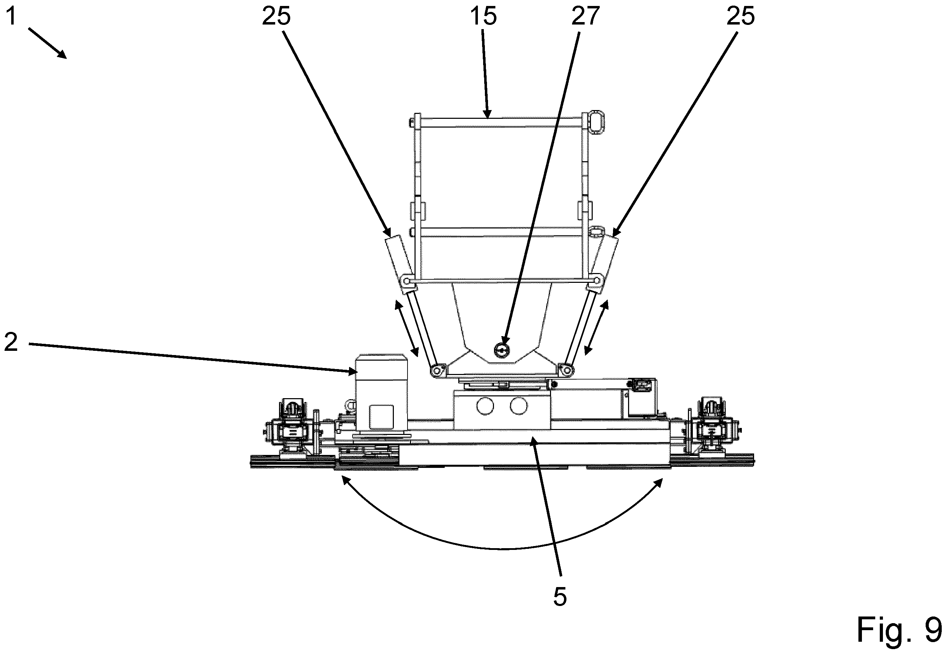

Aus Figur 9 geht eine Ansicht auf die Schwenkvorrichtung 27 zwischen Wechselvorrichtung 15 und Führungseinrichtung 5 hervor, über welche die Führungseinrichtung 5 gegenüber der Wechselvorrichtung 15 verschwenkt werden kann. Hierzu sind Arbeitszylinder 25 vorgesehen, welche die Schwenkbewegung zwischen der Wechselvorrichtung 15 und der Führungseinrichtung 5 einleiten. Damit kann die Führungseinrichtung 5 schon vor dem Schneidevorgang ausgerichtet und auch im laufenden Betrieb an der Wechselvorrichtung 15 geschwenkt werden.

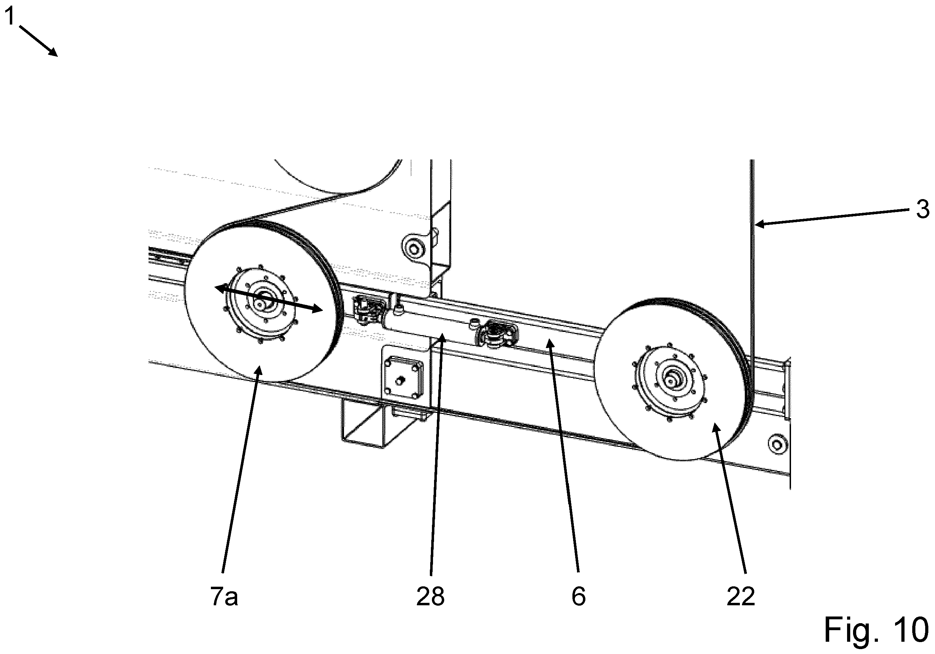

Figur 10 ist eine Detailansicht auf die Seilspeicher- und Seilspannungseinrichtung 6. Diese verfügt über einen Spannzylinder 28 der die als Spannrolle genutzte Umlenkrolle 7a bewegt. Der vorzugsweise als Hydraulikzylinder ausgebildete Spannzylinder 28 wird beim Sägen mit Druck beaufschlagt, um die Seilspannung konstant zu halten. Dies erfolgt nach dem Funktionsprinzip einer Feder. Der Druck im Spannzylinder 28 ist relativ konstant, allerdings wird nicht auf den Druck geregelt, sondern auf das Ausgangssignal beispielweise eines Messbolzens, der die Laschen mit dem Auge des Zylinders 28 verbindet. Wenn, wie in Figur 4 gezeigt, nur ein Hauptteleskopauszug 12, 12b ausgefahren wird, sorgt der Spannzylinder 28 mittels der Druckregelung über die Verschiebung der Spannrolle 7a automatisch für den Seillängenausgleich. Beim Auflegen des Sägeseils 3 wird der Spannzylinder 28 eingefahren, um das Seil 3 ohne Spannung auf die Umlenkrollen 7, 7a, 8, 8b, 9, 9c, 10, 10d 22, 23 der Führungseinrichtung 5 legen zu können.

Die Seilspannungseinrichtung 6 mit der Umlenkrolle 7a dient zusätzlich dem Zweck, Seillängenänderungen, die sich beispielsweise durch die diagonale Ausrichtung des Sägeabschnitts 4, wie in Figur 4 dargestellt ergeben und die nicht mit den Seilspeichern 6a, 6b, 6c, 6d kompensiert werden können, auszugleichen.

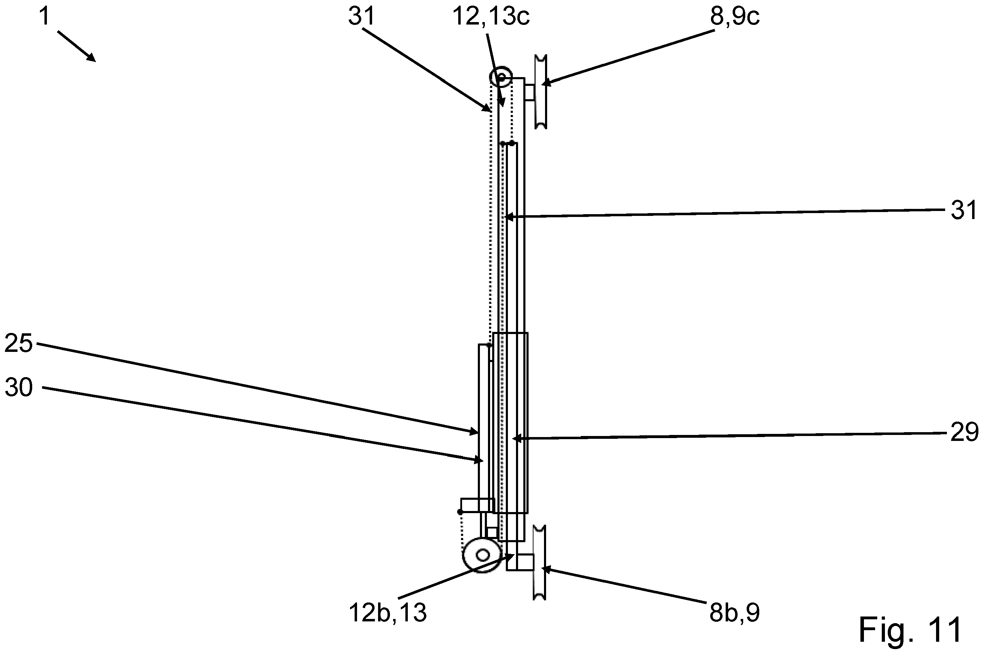

In Figur 11 ist eine Seitenansicht auf einen eingezogenen unteren Hauptteleskopauszug 12, 12b, 13, 13c gezeigt. Die Hauptteleskopauszüge 12, 12b, 13, 13c verfügen jeweils über einen Arbeitszylinder 25 über den der Doppelteleskopauszug 12, 12b, 13, 13c ausgezogen werden kann. Der Ausschubkasten 29 ist fest mit dem Arbeitszylindergehäuse 30 verbunden. Der obere Teleskopauszug 12, 13c ist mit der oberen Umlenkrolle 8, 9c, und der Kolbenstange des Arbeitszylinders 25 verbunden. Der Arbeitszylinder 25 verstellt über die Kolbenstange die Höhe des oberen Teleskopauszuges 12, 13c. Der untere Teleskopauszug 12b, 13 wird über Seilzüge 31 in seiner Höhe durch die Bewegung des oberen Teleskopauszuges 12, 13c verstellt. Die zwei Seilzüge 31 sind notwendig, um sowohl Zug als auch Druck auszuüben.

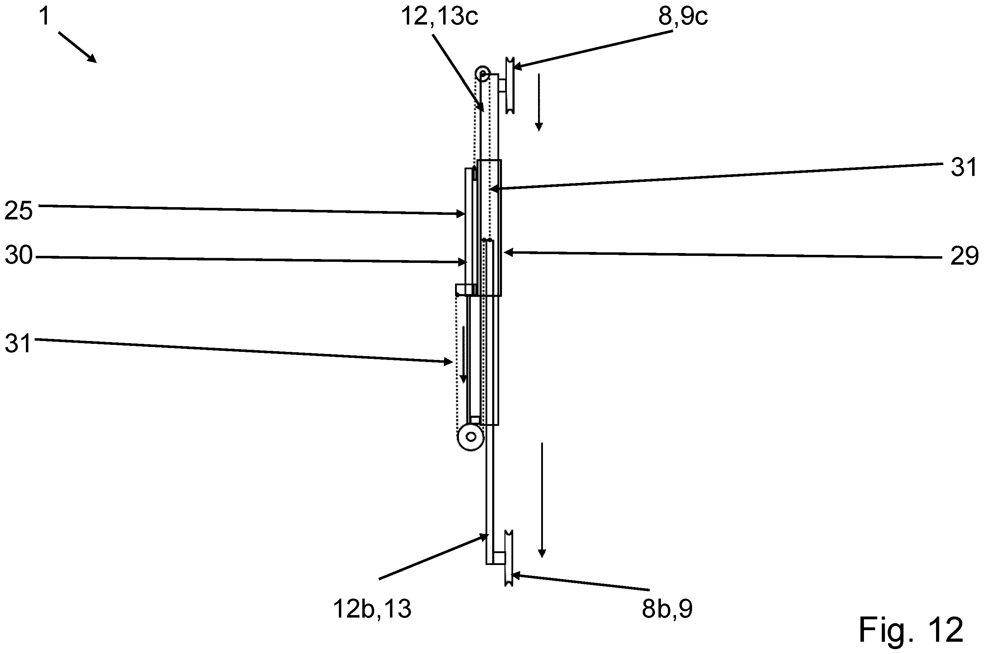

Wie in Figur 12 zu sehen ist, bewirkt das Herunterschieben des oberen Teleskopauszuges 12, 13c mittels des Arbeitszylinders 25 über die Seilzüge, dass der untere Teleskopauszug 12b, 13 um das doppelte heruntergeschoben wird. Wenn beispielsweise der Sägeabschnitt 4 mit einem Hauptteleskopauszug um einen Meter nach unten verfahren wird, ist es ausreichend, die obere Umlenkrolle 8, 9c des Teleskopauslegers um einen halben Meter nach unten zu verschieben. Dies kann einfach durch eine gesteuerte Längenänderung des oberen Teils des dreiteiligen Hauptteleskopauszuges 12, 12b, 13, 13c, 29 erreicht werden. Die Längenänderung des Hauptteleskopauszuges 12, 12b, 13, 13c nach oben und unten kann beispielsweise mit Hilfe von Arbeitszylindern erfolgen. Die Teleskopierbarkeit kann auch über zwei Hydraulikzylinder oder einen teleskopierbaren Hydraulikzylinder, einen elektrischen Linearantrieb, einen Zahnstangenantrieb, einen Hubspindelantrieb mit Trapezspindel oder dergleichen erfolgen. Bei der oben beispielhaft vorgeschlagenen Änderung der Sägetiefe um einen Meter wäre ein sehr langer Hydraulikzylinder vorzusehen, der den unteren Ausschub 12b, 13 entsprechend ausschieben kann. Zudem wäre ein weiterer Hydraulikzylinder erforderlich, der den oberen Teleskopausschub 12, 13c um einen halben Meter einfährt. Daher bietet die in den Figuren 11 und 12 gezeigt Konstruktion eine starke Vereinfachung dadurch, dass nur ein Arbeitszylinder 25 für jeden Doppelteleskopauszug 12, 12b, 13, 13c verwendet wird, der zunächst jeweils den oberen Teleskopauszug 12, 13c betätigt. Die notwendige doppelte Längenänderung des unteren Teleskopauszuges 12b, 13 wird durch ein System mit zwei Seilzügen 31 - oder Kettenzügen mit zwei Umlenkrollen am oberen Teleskopauszug 12, 13c gelöst, das den unteren Teleskopausauszug 12b, 13 mit dem oberen Teleskopauszug 12, 13c koppelt.

Die vorgeschlagene Seilsäge 1 hat den Vorteil, dass die Seilspeicherung auf mehrere Seilspeicher 6a, 6b, 6c, 6d aufgeteilt ist. Für die Seilspeicherung bei der Veränderung der Breite des Sägeabschnitts 4 sind zweimal zwei Umlenkrollen 7, 7a, 10, 10d vorgesehen, die die Längenänderung des Sägeseils 3 kompensieren, wenn der Abstand der Hauptteleskopauszüge 12, 12b, 13, 13c verändert wird. Dabei werden die Umlenkrollen 7a, 22 bzw. 10, 23 jeweils mittels des ersten bzw. vierten Teleskopauszugs 11, 14 gleichlaufend mit den Hauptteleskopauszügen 12, 12b, 13, 13c mitbewegt.

Für die Veränderung der Zustellung des Sägeseils 3, die über die Veränderung der Länge bzw. Höhe der seitlichen Teleskopauszüge eingestellt wird, ist die Seilspeicherung in den Teleskopauszügen 12, 12b, 13, 13c selbst vorgesehen. Die Teleskopauszüge 12, 12b, 13, 13c werden somit nicht nur zur Veränderung der Zustellung des Sägeseils verwendet werden, sondern über eine gesteuerte Längenänderung der Doppelteleskopauszüge 12, 12b, 13, 13c nach oben und unten in Verbindung mit zwei weiteren, am oberen Ende der Teleskopauszügen angeordneten Umlenkrollen 8, 9c, als Seilspeicher 6b, 6c eingesetzt.

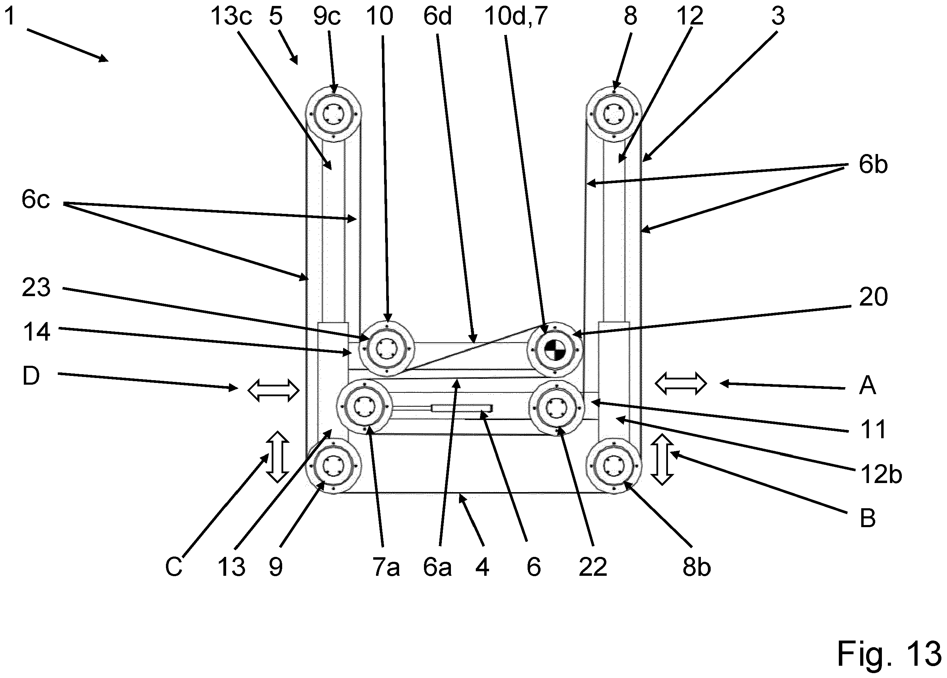

Bei einer Seilsäge 1 ist es vorteilhaft, die Anzahl der Umlenkungen der Führungseinrichtung 5 möglichst gering zu halten, weil jede Umlenkung zum Verschleiß des Sägeseils 3 beiträgt. In diesem Sinne zeigt die Figur 13 eine Variante der erfindungsgemäßen Seilsäge 1, bei der die Führungseinrichtung 5 lediglich acht Rollen umfasst. Die Teleskopauszüge 11, 12, 12b, 13, 13c und 14 sind bei dieser Variante praktisch identisch zu der Seilsäge 1 entsprechend den Figuren 2-12.

Bei dieser Variante übernimmt die Antriebsrolle 20 zusätzlich die Funktion der Umlenkrolle 7 der in den Figuren 2 bis 12 dargestellten Seilsäge 1. Die Antriebsrolle 20 bleibt gleichzeitig als Umlenkrolle 10d ein Element des Seilspeichers 6d. Dadurch, dass bei dieser Variante das Sägeseil 3 diagonal von der Umlenkrolle 10 zur Umlenkrolle 10d geführt wird, entfallen gegenüber der in den Figuren 2-12 dargestellten Seilsäge 1 zwei Umlenkrollen und die Anzahl der Umlenkungen des umlaufenden Sägeseils wird um 20% reduziert, was eine entsprechende Verschleißreduzierung des Sägeseils 3 zur Folge hat.

### Bezuaszeichenliste

1 Seilsäge
2 Antrieb
3 Sägeseil
4 Sägeabschnitt
5 Führungseinrichtung
6 Seilspannungseinrichtung, 6a, 6b, 6c, 6d Seilspeicher
7 7a erstes Umlenkrollenpaar
8 8b zweites Umlenkrollenpaar
9 9c drittes Umlenkrollenpaar
10 10d viertes Umlenkrollenpaar
11 erster Teleskopauszug
12 12b zweiter Teleskopauszug
13 13c dritter Teleskopauszug
14 vierter Teleskopauszug
15 Wechselvorrichtung
16 Teleskoplader
17 Aufhängung
18 Lochplatte
19 Standfuß
20 Antriebsrolle
21 Schutzabdeckung
22 weitere Umlenkrolle
23 weitere Umlenkrolle
24 Drehvorrichtung
25 Arbeitszylinder (Hydraulikzylinder, Pneumatikzylinder)
26 Drehgelenk
27 Schwenkvorrichtung
28 Spannzylinder
29 Ausschubkasten
30 Arbeitszylindergehäuse
31 Seilzüge
W Werkstück
A erste Bewegungsrichtung
B zweite Bewegungsrichtung
C dritte Bewegungsrichtung
D vierte Bewegungsrichtung

## Patentansprüche

1. Seilsäge (1) zum Zerteilen eines massiven Werkstücks (W), wie ein Beton- oder Steinblock, mit
- mindestens einem von einem Antrieb (2) angetriebenen Sägeseil (3), wobei das Sägeseil (3) einen Sägeabschnitt (4) zum Eingriff in das zu zerteilende Werkstück (W) bildet,
- wenigstens einer Führungseinrichtung (5) zur Führung des angetriebenen Sägeseils (3), wobei die Führungseinrichtung (5) dazu eingerichtet ist, den Sägeabschnitt (4) des angetriebenen Sägeseils (3) zu dem Werkstück (W) zu positionieren, wobei die Führungseinrichtung (5) mehrere unabhängige Bewegungsrichtungen (A, B, C, D) gestattet, sodass neben einer Zustellung des Sägeabschnitts (4) in Richtung des zu zerteilenden Werkstücks (W) zumindest auch eine Verlängerung oder Verkürzung des gebildeten Sägeabschnitts (4) ermöglicht ist,
- wenigstens einer Seilspeicher- und Seilspannungseinrichtung (6) zur Auf- und Entnahme und Spannung des Sägeseils (3) bei Veränderung der Position und/oder Länge des Sägeabschnitts (4) durch die Führungseinrichtung (5),
wobei die Führungseinrichtung (5) zwei Hauptteleskopauszüge (12, 12b, 13, 13c) aufweist, über welche die Zustellung des Sägeabschnitts (4) in Richtung des zu zerteilenden Werkstücks (W) erfolgt, wobei die Hauptteleskopauszüge (12, 12b, 13, 13c) der Führungseinrichtung (5) im Abstand zueinander veränderbar sind, um die Länge des Sägeabschnitts (4) zu verändern, **dadurch gekennzeichnet, dass** die
Führungseinrichtung (5) für jede der Bewegungsrichtungen (A, B, C, D) über einen separaten, der einzelnen Bewegungsrichtung (A, B, C, D) zugeordneten Seilspeicher (6a, 6b, 6c, 6d) verfügt.

2. Seilsäge (1) nach Anspruch 1, **dadurch gekennzeichnet, dass** die Führungseinrichtung (5) für jede der Bewegungsrichtungen (A, B, C, D) einen aus mindestens einem Umlenkrollenpaar (7, 7a, 8, 8b, 9, 9c, 10, 10d) gebildeten Seilspeicher (6a, 6b, 6c, 6d) aufweist.

3. Seilsäge (1) nach Anspruch 2, **dadurch gekennzeichnet, dass** das Umlenkrollenpaar (7, 7a, 8, 8b, 9, 9c, 10, 10d) eines Seilspeichers (6a, 6b, 6c, 6d) über eine Vergrößerung und Verkleinerung des Rollenabstandes der paarweise zum Seilspeicher (6a, 6b, 6c, 6d) zusammengefassten Umlenkrollen (7, 7a, 8, 8b, 9, 9c, 10, 10d) bei Veränderung der Position und/oder Länge des Sägeabschnitts (4) Sägeseil (3) speichert oder freigibt.

4. Seilsäge (1) nach Anspruch 2 oder 3, **dadurch gekennzeichnet, dass** der Rollenabstand der paarweise zum Seilspeicher (6a, 6b, 6c, 6d) zusammengefassten Umlenkrollen (7, 7a, 8, 8b, 9, 9c, 10, 10d) über Teleskopauszüge (11, 11a, 12, 12b, 13, 14), an denen mindestens eine Umlenkrolle (7a, 8, 8b, 9, 9c, 10) angeordnet ist, veränderbar ist.

5. Seilsäge (1) nach einem der Ansprüche 2 bis 4, **dadurch gekennzeichnet, dass** der Rollenabstand der paarweise zum Seilspeicher (6b, 6c) zusammengefassten Umlenkrollen (8, 8b, 9, 9c) über Teleskopauszüge (12, 12b, 13, 13c), an denen beide Umlenkrollen (8, 8b, 9, 9c) angeordnet sind, veränderbar ist.

6. Seilsäge (1) nach einem der vorhergehenden Ansprüche, **dadurch gekennzeichnet, dass** die Hauptteleskopauszüge (12, 12b, 13, 13c) paarweise zum Seilspeicher (6b, 6c) zusammengefasste Umlenkrollen (8, 8b, 9, 9c) aufweisen, die über die Hauptteleskopauszüge (12, 12b, 13, 13c) zur Zustellung des Sägeabschnitts (4) in Richtung des zu zerteilenden Werkstücks (W) beidseitig in der Auszugsposition veränderbar sind.

7. Seilsäge (1) nach einem der vorhergehenden Ansprüche, **dadurch gekennzeichnet, dass** die Hauptteleskopauszüge (12, 12b, 13, 13c) unabhängig voneinander bewegbar sind.

## Claims

1. A wire saw (1) for cutting a solid workpiece (W), such as a block of concrete or stone, with
- at least one sawing wire (3) driven by a drive (2), wherein the sawing wire (3) forms a sawing section (4) for engagement in the workpiece (W) to be cut,
- at least one guide device (5) for guiding the driven sawing wire (3),
wherein the guide device (5) is designed to position the sawing section (4) of the driven sawing wire (3) relative to the workpiece (W), wherein the guide device (5) allowing several independent directions of movement (A, B, C, D), so that, in addition to an infeed of the sawing section (4) in the direction of the workpiece (W) to be cut, at least an extension or shortening of the formed cutting section (4) is possible,
at least one wire storage and wire tensioning device (6) for taking up and releasing and tensioning the sawing wire (3) when the position and/or length of the sawing section (4) is changed by the guide device (5),
wherein the guide device (5) has two main telescopic extensions (12, 12b, 13, 13c), via which the infeed of the sawing section (4) in the direction of the workpiece (W) to be cut takes place, wherein the main telescopic extensions (12, 12b, 13, 13c) of the guide device (5) being variable at a distance from each other in order to change the length of the sawing section (4),
**characterized in that**
the guide device (5) has a separate wire store (6a, 6b, 6c, 6d) for each of the directions of movement (A, B, C, D) each of which being associated with a single direction of movement (A, B, C, D).

2. Wire saw (1) according to claim 1, **characterized in that** the guide device (5) has a wire storage device (6a, 6b, 6c, 6d) formed from at least one pair of guide rollers (7, 7a, 8, 8b, 9, 9c, 10, 10d) for each of the directions of movement (A, B, C, D).

3. Wire saw (1) according to claim 2, **characterized in that** the pair of guide rollers (7, 7a, 8, 8b, 9, 9c, 10, 10d) of a wire storage device (6a, 6b, 6c, 6d) via an increasing and decreasing the distance between the rollers of the combined in pairs to the wire storage (6a, 6b, 6c, 6d) combined guide rollers (7, 7a, 8, 8b, 9, 9c, 10, 10d) stores or releases sawing wire (3) when the position and/or length of the sawing section (4) is changed.

4. Wire saw (1) according to claim 2 or 3, **characterized in that** the distance of the rollers of the combined in pairs to form the wire storage (6a, 6b, 6c, 6d) guide rollers (7, 7a, 8, 8b, 9, 9c, 10, 10d) can be adjusted via telescopic extensions (11, 11a, 12, 12b, 13, 14), on which at least one guide roller (7a, 8, 8b, 9, 9c, 10) is arranged.

5. Wire saw (1) according to any one of claims 2 to 4, **characterized in that** the distance of the rollers of the combined in pairs to form the wire storage (6a, 6b, 6c, 6d) guide rollers (7, 7a, 8, 8b, 9, 9c, 10, 10d) can be adjusted via telescopic extensions (11, 11a, 12, 12b, 13, 14), on which both guide rollers (7a, 8, 8b, 9, 9c, 10) are arranged.

6. Wire saw (1) according to any one of the preceding claims, **characterized in that** the main telescopic extensions (12, 12b, 13, 13c) have guide rollers (8, 8b, 9, 9c) combined in pairs to form the wire storage (6b, 6c) 9, 9c) which can be adjusted in both directions in the extended position via the main telescopic extensions (12, 12b, 13, 13c) to infeed the sawing section (4) in the direction of the workpiece (W) to be cut.

7. Wire saw (1) according to any one of the preceding claims, **characterized in that** the main telescopic extensions (12, 12b, 13, 13c) can be moved independently of one another.

## Revendications

1. Scie à câble (1) pour découper une pièce à fabriquer massive (W), comme un bloc de béton ou de pierre, avec
- au moins un câble de scie (3) entraîné par un entraînement (2), dans lequel le câble de scie (3) formant une section de scie (4) destinée à s'engager dans la pièce à fabriquer (W) à découper,
- au moins un dispositif de guidage (5) pour guider le câble de scie entraîné, dans lequel le dispositif de guidage (5) étant adapté pour positionner la section de scie (4) du câble de scie entraîné (3) par rapport à la pièce à fabriquer (W), dans lequel le dispositif de guidage (5) permettant plusieurs directions de mouvement indépendantes (A, B, C, D), de sorte qu'en plus d'une avance de la section de scie (4) en direction de la pièce à fabriquer (W) à découper, au moins un allongement ou un raccourcissement de la section de scie (4) formée est également possible,
- au moins un dispositif de stockage et de tension de câble (6) pour la mise en place et le retrait et la tension du câble de scie (3) en cas de modification de la position et/ou de la longueur de la section de scie (4) par le dispositif de guidage (5),
dans lequel le dispositif de guidage (5) présentant deux extensions télescopiques principales (12, 12b, 13, 13c) par l'intermédiaire desquelles s'effectue l'avance de la section de scie (4) en direction de la pièce à fabriquer (W) à découper, dans lequel les extensions télescopiques principales (12, 12b, 13, 13c) du dispositif de guidage (5) pouvant être modifiées en distance l'une par rapport à l'autre afin de modifier la longueur de la section de scie (4),
**caractérisé en ce que**
le dispositif de guidage (5) dispose, pour chacune des directions de déplacement (A, B, C, D), d'un accumulateur de câble (6a, 6b, 6c, 6d) séparé, associé à la direction de déplacement individuelle (A, B, C, D).

2. Scie à câble (1) selon la revendication 1, **caractérisée en ce que** le dispositif de guidage (5) présente pour chacune des directions de mouvement (A, B, C, D) un magasin de câble (6a, 6b, 6c, 6d) formé d'au moins une paire de poulies de renvoi (7, 7a, 8, 8b, 9, 9c, 10, 10d).

3. Scie à câble (1) selon la revendication 2, **caractérisée en ce que** la paire de poulies de renvoi (7, 7a, 8, 8b, 9, 9c, 10, 10d) d'un magasin de câble (6a, 6b, 6c, 6d) stocke ou libère du câble de scie (3) en augmentant et en diminuant la distance entre les poulies, les poulies de renvoi (7, 7a, 8, 8b, 9, 9c, 10, 10d) réunies par paires pour former le magasin de câble (6a, 6b, 6c, 6d), lorsque la position et/ou la longueur de la section de scie (4) change.

4. Scie à câble (1) selon la revendication 2 ou 3, **caractérisée en ce que** la distance entre les poulies de renvoi (7, 7a, 8, 8b, 9, 9c, 10, 10d), qui sont combinés par paires pour former le magasin de câble (6a, 6b, 6c, 6d), peut être ajusté par des extensions télescopiques (11, 11a, 12, 12b, 13, 14), sur lesquelles au moins une poulie de renvoi (7a, 8, 8b, 9, 9c, 10) est disposée.

5. Scie à câble (1) selon l'une des revendications 2 à 4, **caractérisée en ce que** la distance entre les poulies de renvoi (7, 7a, 8, 8b, 9, 9c, 10, 10d), qui sont combinés par paires pour former le magasin de câble (6a, 6b, 6c, 6d), peut être ajusté par des extensions télescopiques (11, 11a, 12, 12b, 13, 14), sur lesquelles les deux poulies de renvoi (8, 8b, 9, 9c) sont disposées.

6. Scie à câble (1) selon l'une des revendications précédentes, **caractérisée en ce que** les extensions télescopiques principales (12, 12b, 13, 13c) présentent des poulies de renvoi (8, 8b, 9, 9c) regroupées par paires pour former le magasin de câbles (6b, 6c), dont la position d'extension peut être modifiée des deux côtés par l'intermédiaire des extensions télescopiques principales (12, 12b, 13, 13c) pour l'avance de la section de scie (4) en direction de la pièce à fabriquer (W) à découper.

7. Scie à câble (1) selon l'une des revendications précédentes, **caractérisée en ce que** les extensions télescopiques principales (12, 12b, 13, 13c) sont mobiles indépendamment les unes des autres.
